Europäisches Patentamt

European Patent Office

Office européen des brevets

(19)

(11) Veröffentlichungsnummer: **0 314 125 B1**

# EUROPÄISCHE PATENTSCHRIFT

(12)

(12)

(45) Veröffentlichungstag der Patentschrift: **20.05.92**

(51) Int. Cl.⁵: **G01L 19/00**

(21) Anmeldenummer: **88117896.6**

(22) Anmeldetag: **27.10.88**

(54) Sensor für flüssige und gasförmige Medien.

(30) Priorität: **28.10.87 DE 8714327 U**

(43) Veröffentlichungstag der Anmeldung:
**03.05.89 Patentblatt 89/18**

(45) Bekanntmachung des Hinweises auf die
Patenterteilung:
**20.05.92 Patentblatt 92/21**

(84) Benannte Vertragsstaaten:
**DE FR GB IT**

(56) Entgegenhaltungen:
**US-A- 4 108 008**
**US-A- 4 513 623**

(73) Patentinhaber: **ASYS GMBH**
**Justinus-Kerner-Weg 24**
**W-7060 Schorndorf(DE)**

(72) Erfinder: **Hügler, Klaus, Dipl.-Ing.**
**Justinus-Kerner-Weg 24**
**W-7060 Schorndorf(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

**Beschreibung**

Die Erfindung betrifft eine Sensoreinrichtung für flüssige und gasförmige Medien, welche die Merkmale des Oberbegriffs des Patentanspruches 1 aufweist.

Es sind Sensoren bekannt (US-A-4 513 623), bei denen das Meßzellengehäuse an seiner einen Stirnseite mit einem hohlen Gewindezapfen versehen ist, der in die mit einem Gewinde versehene Fluid-Verbindungsleitung eingeschraubt wird. Das Meßzellengehäuse hat hierbei außer der Aufnahme der Meßzelle und der nachgeschalteten Elektronik nur die Funktion eines Adapters, der sowohl die Fluid-Verbindung als auch die mechanische Verbindung zwischen der Meßstelle und dem Meßzellengehäuse herstellt. Die Montage oder Demontage eines derartigen Meßzellengehäuses kann nur erfolgen, wenn die Meßstelle zuvor drucklos und fluidfrei gemacht worden ist. Dies ist ein wesentlicher Mangel derartiger Sensoren.

Bei einer Sensoreinrichtung der eingangs genannten Art (US-A-4 108 008) ist der mehrere Meßstellenanschlüsse aufweisende Körper als ein Block ausgebildet, welcher in jeder der zu einer Meßstelle führenden Fluid-Verbindungsleitung eines der Absperrventile enthält. Mit diesem Block ist ein zweiter Block kuppelbar, in den für jedes Meßzellengehäuse eine Gewindebuchse eingeschraubt ist, in die ein hohler Gewindezapfen des Meßzellengehäuses eingeschraubt wird. Über das dem Sensorgehäuse abgewandte Ende springt eine stiftförmige Verlängerung der Gewindebuchse vor, die dann, wenn die beiden Blöcke miteinander gekuppelt sind, das zugeordnete Absperrventil in seiner geöffneten Stellung hält. Bei dieser Lösung können deshalb jederzeit die Meßzellen von ihren Meßstellen getrennt oder mit ihnen verbunden werden, ohne vorher die Meßstellen druck- und fluidfrei zu machen. Ein wesentlicher Nachteil besteht hierbei darin, daß ein einzelnes Meßzellengehäuse nicht gelöst, angeschlossen oder ausgetauscht werden kann, weil das zugehörige Absperrventil nur geschlossen oder geöffnet wird, wenn der die Gewindebuchsen enthaltende Block abgekuppelt bzw. angekuppelt wird. Weiterhin ist nachteilig, daß es für eine Demontage oder Montage des Meßzellengehäuses erforderlich ist, daß die elektrischen Verbindungsleitungen gelöst sind, weil das Meßzellengehäuse dabei um seine Längsachse gedreht werden muß. Schließlich ist auch der Raumbedarf und der Aufwand dieser bekannten Lösung in vielen Fällen störend.

Der Erfindung liegt die Aufgabe zugrunde, eine Sensoreinrichtung der eingangs genannten Art zu schaffen, die trotz einer raumsparenden und kostengünstigen Bauweise eine einfach und rasch auszuführende Montage und Demontage von Meßzellen erlaubt. Diese Aufgabe löst eine Sensoreinrichtung mit den Merkmalen des Patentanspruches 1.

Durch die Ausbildung des Verbindungsteils als Kartusche, welche das Meßzellengehäuse aufnimmt, wird nicht nur ein weitgehender Schutz des Sensors und insbesondere seiner Meßzelle und der in der Regel dieser zugeordneten Elektronik gegen mechanische Beschädigung erreicht. Eine derartige Kartusche erlaubt es auch, auf den bei den bekannten Meßzellengehäusen notwendigen Hohlzapfen für die Verbindung mit der Meßstelle zu verzichten, da die Positionierung des Meßzellengehäuses in radialer Richtung in der Kartusche mittels eines Verschlußkörpers erfolgt, bei dem es sich um eine Überwurfmutter, einen Deckel oder dergleichen handeln kann. Die Kartusche ermöglicht somit eine einheitliche Ausbildung aller Meßzellgenhäuse, was die Lagerhaltungskosten erheblich reduziert und die Bereitstellung kostengünstiger Ersatz- oder Austauschmodule ermöglicht. Dank der Kartusche und des Verschlußkörpers entfällt aber auch eine Drehbewegung des Meßzellengehäuses beim Herstellen und Lösen der Verbindung. Das Meßzellengehäuse braucht nur in die Kartusche eingeführt und herausgezogen zu werden, was auch dann ohne weiteres möglich ist, wenn bereits die elektrischen Verbindungsleitungen angeschlossen sind. Deshalb ist sowohl die Montage als auch die Demontage eines Meßzellengehäuses rasch und problemlos auszuführen, zumal beim Einführen in die Kartusche das Absperrventil automatisch geöffnet und beim Herausnehmen automatisch geschlossen wird, so daß die Montage und Demontage erfolgen kann, wenn die Meßstelle unter Fluiddruck steht, ohne daß Fluid an der Meßstelle austritt.

Da häufig für den Anschluß eines Sensors zur Druck-, Temperatur- oder Durchflußmessung an das Fluidsystem eine sogenannte "Verschraubung" verwendet wird, deren Gehäuse einen Durchlaß und mindestens zwei mit letzterem in Verbindung stehende Anschlüsse für Rohre und/oder Schläuche aufweist, ist vorteilhafterweise der Verbindungsteil als Teil eines solchen Verschraubungsgehäuses ausgebildet. Die bauliche Vereinigung des Verbindungsteils mit dem Verschraubungsgehäuse führt zu einer platz- und kostensparenden Integration des Sensors in das Rohrverschraubungssystem.

Ferner ist es besonders vorteilhaft, das Meßzellengehäuse als eine Patrone auszubilden, wobei diese Patrone vorteilhafterweise eine der Meßzelle zugeordnete Elektronik enthält. Außerdem kann sie als Kalter für einen Kontaktträger dienen. Man hat dann einen kompletten, leicht zu handhabenden Modul, der nur in die Kartusche eingeschoben und in dieser gesichert zu werden braucht.

Das automatische Öffnen und Schließen des Absperrventils läßt sich in einfacher Weise dadurch realisieren, daß man für das Absperrventil einen gegen das Meßzellengehäuse hin federbelasteten Schließkörper vorsieht. Dieser Schließkörper kann dann über einen Stößel oder dergleichen vom Meßzellengehäuse entgegen der Kraft der Feder geöffnet werden, wenn das Meßzellengehäuse in seine Endlage relativ zum Verbindungsteil kommt, also beispielsweise nahezu vollständig in die Kartusche eingeführt ist. Wird das Meßzellengehäuse vom Verbindungsteil gelöst, drückt die Feder den Schließkörper wieder in dessen Schließlage.

Ein Austreten von Fluid durch das Absperrventil beim Öffnungsund Schließvorgang wird bei einer vorteilhaften Ausführungsform dadurch vermieden, daß zwischen dem Schließkörper und dem Meßzellengehäuse ein hohler Stößel angeordnet und eine fluiddichte Ringdichtung zwischen dem Stößel und der Wandung eines zum Schließkörper führenden Kanales vorgesehen sind. Selbst wenn der hohle Stößel am Meßzellengehäuse vorgesehen ist, kann hierbei ein Austreten von Fluid verhindert werden, weil beim Einführen des Stößels in die zum Schließkörper führende Fluid-Verbindungsleitung die Ringdichtung wirksam wird, ehe das Absperrventil geöffnet wird. Ebenso wird beim Herausziehen dieses Stößels aus der Fluid-Verbindungsleitung zunächst das Absperrventil geschlossen, ehe die Ringdichtung unwirksam wird.

Sofern die Meßzelle eine solche für eine Druckmessung ist, ist sie vorteilhafterweise als ein Kolben ausgebildet, der entgegen der Kraft einer Feder in dem als Zylinder ausgebildeten Gehäuse verschiebbar angeordnet ist. Es kann dann mit Hilfe der Feder ein oberer Grenzwert des Druckes festgelegt werden, bei dessen Überschreiten die Meßzelle im Gehäuse entgegen der Kraft der Feder bewegt wird. Diese Bewegung kann dazu genutzt werden, die Meßzelle vor einer Überlast zu schützen, indem beispielsweise die Fluid - Verbindungsleitung mittels des Schießkörpers verschlossen wird, welcher der Bewegung der Meßzelle folgt, bis er seine Schließstellung erreicht hat. Sinkt der Druck hier unter den Grenzwert ab, bewegen sich die Meßzelle und der Schließkörper wieder in ihre Ausgangslage zurück. Natürlich wäre es möglich, die Bewegung der Meßzelle auch zur Bildung eines Schaltsignales zu nutzen.

Ferner kann man eine in Abhängigkeit von der Stellung der Meßzelle gesteuerte Druckentlastungseinrichtung vorsehen. Eine besonders einfache Aufühhrungsform eine solchen Druckentlastungseinrichtung ist eine Bohrung in dem den Zylinder bildenden Gehäuse, welche von der Meßzelle freigegeben wird, wenn eine Verschiebung auftritt.

Die verschiebbare Anordnung der Meßzelle im Sensorgehäuse erhöht vor allem durch den Platzbedarf für die die Meßzelle belastende Feder das erforderliche Volumen des Gehäuses. Um den Raumbedarf für die Feder möglichst klein zu halten, kann man die auf die Meßzelle vom Fluid ausgeübte Kraft mit Hilfe eines Ventiltellers reduzieren, welcher wie ein teilweise druckkompensierter Kolben wirkt.

Druckspitzen, welche für die Meßzelle schädlich sein könnten, werden vorzugsweise dadurch gedämpft, daß man die Fluid-Verbindungsleitung als Drosselstrecke ausbildet.

In der Regel wird es erforderlich sein, die von der Meßzelle erzeugten Signale in Form elektrischer Signale weiterzuleiten. In solchen Fällen ist vorteilhafterweise im Meßzellengehäuse eine relativ zu diesem längsverschiebbar und/oder drehbar angeordneter Kontaktträger vorgesehen. Der Kontaktträger kann dann ebenso wie die Meßzelle in jede beliebige Winkelposition bezüglich des Gehäuses eingestellt werden. Die Abgangsrichtung des mit dem Sensor zu verbindenden Kabels kann hierbei frei gewählt werden. Außerdem vereinfacht eine solche Anordnung auch den Austausch. Zu einem einfachen Einsetzen und Austauschen der Meßzelle und des Kontaktträgers tragen ferner die Merkmale der Patentansprüche 10 und 11 bei.

Eine die Meßzelle, die Elektronik und den Kontaktträger enthaltende Patrone erleichtert nicht nur die Montage oder den Austausch. Da sie aus Kunststoff bestehen kann und keinen nennenswerten mechanischen Belastungen ausgesetzt ist, verbilligt sie das Austauschteil merklich. Es reduziert auch die Lagerhaltungskosten. Letztere sind jedoch auch insofern wesentlich niedriger als bei den bekannten Lösungen, als das Gehäuse für Meßzellen mit unterschiedlichen Meßbereichen verwendbar ist. Man kann daher auch in Fällen, in denen die auftretenden Drükke nicht bekannt sind, problemlos zunächst eine unempfindliche Meßzelle einsetzen und erst aufgrund der damit erhaltenen Meßergebnisse die passende Meßzelle auswählen.

Die erfindungsgemäße Verschraubung kann im Bedarfsfall in einfacher Weise mit einem Ventil zu einer Baueinheit vereinigt werden. Eine derartige Baugruppe kann beispielsweise zur Druckregelung oder zur Stellungsregelung eines Ventils verwendet werden, wobei alle erforderlichen elektrischen Leitungen in einem einzigen Kabel vereinigt sein können.

Im folgenden ist die Erfindung anhand von drei in der Zeichnung dargestellten Ausführungsbeispielen im einzelnen erläutert.

Es zeigen

Fig. 1　　einen Längsschnitt eines ersten Ausführungsbeispiels,

Fig. 2　　einen Längsschnitt eines zweiten Ausführungsbeispiels.

Fig. 3 einen Längsschnitt eines dritten Ausführungsbeibeispieles, wobei in der linken und rechten Hälfte zwei unterschiedliche Positionen des Meßzellengehäuses dargestellt sind.

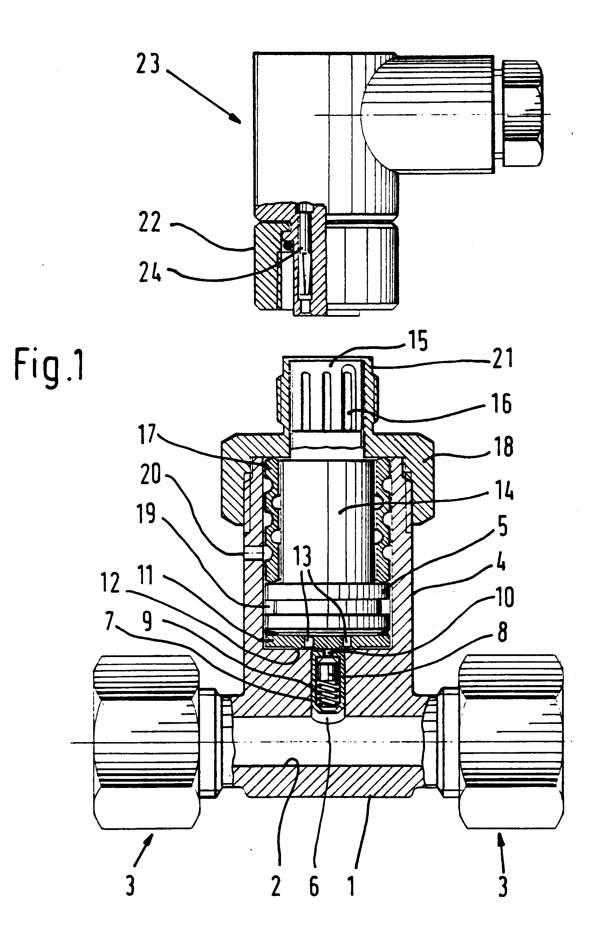

Eine Verschraubung zum gleichachsigen Verbinden zweier nicht dargestellter Rohre einer Hydraulikanlage weist ein metallisches Verschraubungsgehäuse 1 auf, das eine T-artige Form hat. Den Querteil des Verschraubungsgehäuses 1 durchdringt ein geradliniger Durchlaß 2, der die von den beiden Endabschnitten gebildeten, gleichachsig angeordneten Leitungsanschlüsse 3 miteinander verbindet. Wie auch Fig. 1 zeigt, unterscheidet sich somit der Querteil nicht von bekannten Verschraubungen.

Der einstückig mit dem Querteil ausgebildete und rechtwinklig zu diesem angeordnete Mittelteil des Verschraubungsgehäuses 1 ist als zylindrische Kartusche ausgebildet, die ein Sensorgehäuse 4 bildet und deren Innendurchmesser an den Außendurchmesser des Meßzellengehäuses 5 handelsüblicher Druckmeßzellen angepaßt ist. Wie Fig. 1 zeigt, endet der der Aufnahme des eine solche Druckmeßzelle enthaltenden Meßzellengehäuses 5 dienende Innenraum des Sensorgehäuses 4 im Abstand vom Durchlaß 2 und ist mit diesem über einen gleichachsig angeordneten, durch eine Bohrung gebildeten, als Fluid-Verbindungsleitung dienenden Meßkanal 6 verbunden.

In den Meßkanal 6 ist unverschieblich ein Ventilgehäuse 7 eingesetzt, das an dem dem Meßzellengehäuse 5 zugekehrten Ende einen Ventilsitz für einen im Ventilgehäuse 7 längsverschiebbar angeordneten Ventilkörper 8 bildet. Letzteren drückt eine vorgespannte Feder 9 gegen den Ventilsitz. Dieses Absperrventil ist nur dann geschlossen, wenn ein stiftförmiger Fortsatz 10 des Ventilkörpers 8 durch den Ventilsitz hindurch in den Innenraum des Sensorgehäuses 4 ragen kann.

An der diesem Absperrventil zugekehrten Stirnseite des zylindrisch ausgebildeten und längsverschiebbar sowie drehbar im Sensorgehäuse angeordneten Meßzellengehäuses 5 liegt nahe dem äußeren Rand flüssigkeitsdicht als Meßzellenvorlage eine ebene, scheibenförmige Kompensationsplatte 11 an, die an ihrem äußeren Rand fest mit dem Meßzellengehäuse 5 verbunden ist. Innerhalb der Dichtungszone befindet sich die Kompensationsplatte 11 im Abstand von der Stirnseite des Meßzellengehäuses 5. Die letzterem abgekehrte Stirnfläche der Kompensationsplatte 11 ist mit einer vorspringenden Ringschneide 12 versehen, deren Durchmesser etwa halb so groß ist wie der Durchmesser der dicht am Meßzellengehäuse 5 anliegenden Ringzone. Innerhalb der Ringschneide 12, die konzentrisch die Mündungsöffnung des Meßkanales 6 umgibt, durchdringen Bohrungen 13 die Kompensationsplatte 11. Normalerweise liegt die Ringschneide 12 dichtend am Boden des Innenraums des Sensorgehäuses 4 an. Die Hydraulikflüssigkeit füllt dann nur die Bohrungen 13 und den Raum zwischen dem Meßzellengehäuse 5 und der Kompensationsplatte 11.

Mit der der Kompensationsplatte 11 abgekehrten Stirnseite des Druckmeßzellengehäuses 5 ist gleichachsig ein im Durchmesser kleinerer zylindrischer Körper 14 verbunden, der die der Druckmeßzelle zugeordnete Elektronik enthält und an seiner der Druckmeßzelle abgekehrten Stirnfläche gleichachsig mit einem ebenfalls zylindrischen Kontaktträger 15 verbunden ist, welcher Kontaktstifte 16 in zur Längsachse paralleler Lage enthält.

In dem Zwischenraum zwischen dem zylindrischen Körper 14 und der Innenwand des Sensorgehäuses 4 ist eine vorgespannte Rohrfeder 17 angeordnet, welche sich einerseits am Meßzellengehäuse 5 und andererseits an einer Überwurfmutter 18 abstützt, welche den freien Endabschnitt des Sensorgehäuses 4 übergreift und so weit auf ein Außengewinde dieses Endabschnittes aufgeschraubt wird, bis sie an der Stirnfläche des Sensorgehäuses 4 anliegt.

Die Rohrfeder 17 ist so dimensioniert, daß beim Überschreiten eines oberen Grenzwertes des Druckes, dem die Druckmeßzelle durch die Hydraulikflüssigkeit ausgesetzt ist, das Meßzellengehäuse 5 entgegen der Kraft der Rohrfeder 17 gegen die Überwurfmutter 18 hin bewegt wird. Die Kompenstionsplatte 11 bewirkt, daß die Kraft, welche von der Rohrfeder 17 aufgebracht werden muß, kleiner ist als das Produkt aus dem Druck der Hydraulikflüssigkeit und der Stirnfläche des Meßzellengehäuses 5. Der für die Rohrfeder 17 erforderliche Raum ist deshalb kleiner als der Raum, den die Rohrfeder 17 benötigen würde, wenn die Kompensationsplatte 11 nicht vorhanden wäre. Die Bewegung der Kompensationsplatte 11 zusammen mit dem Meßzellengehäuse 5 weg vom Boden des Sensorgehäuses 4 hat zur Folge, daß der Ventilkörper 8 sich in seine Schließstellung bewegen kann, wodurch der Meßkanal 6 abgesperrt wird. Der auf die Druckmeßzelle wirkende Druck kann nun nicht mehr ansteigen. Die Druckmeßzelle ist deshalb gegen einen Überdruck oder einen unzulässig großen Überdruck geschützt.

Wenn die Kompensationsplatte 11 sich vom Boden des Sensorgehäuses 4 weg bewegt, wird die durch die Ringschneide 12 gebildete Dichtung unwirksam. Die Hydraulikflüssigkeit kann nun auch in den Ringspalt zwischen dem Meßzellengehäuse 5 und der Innenwand des Sensorgehäuses 4 eindringen, und schaltet das Meßzellengehäuse 5 schlagartig in seine obere Endlage. Liegt, wie im Ausführungsbeispiel, in der Ringnut 19 des Meßzellengehäuses

kein O-Ring, dann kann die Hydraulikflüssigkeit durch eine im Bereich der Rohrfeder 17 vorgesehene, die Wand des Sensorgehäuses 4 durchdringende Entlastungsbohrung 20 austreten. An dem Austritt von Druckmittelflüssigkeit kann man erkennen, daß ein Überdruck aufgetreten ist. Infolge der Druckentlastung über die Entlastungsbohrung 20 drückt die Rohrfeder 17 das Meßzellengehäuse 5 wieder gegen den Boden des Sensorgehäuses 4 hin. Sofern der Überdruck im Durchlaß 2 noch vorhanden ist, wird dabei das Absperrventil nur kurzzeitig geöffnet. Andernfalls bleibt es bis zum nächsten Auftreten eines Überdruckes geöffnet.

Auf die dem Sensorgehäuse 4 abgekehrte Stirnseite der Überwurfmutter 18 ist gleichachsig eine einstückig mit der Überwurfmutter 18 ausgebildete Hülse 21 angeformt, welche den Kontaktträger 15 und die Kontaktstifte 16 umfaßt und sie vor mechanischen Belastungen schützt. Der Kontaktträger 15 kann in jeder beliebigen Winkellage in der Hülse 21 positioniert sein, welche mit einem Außengewinde für eine Spannmutter 22 versehen ist, mittels deren eine Verbindung mit einem als Ganzes mit 23 bezeichneten Anschlußteil hergestellt wird. Im Ausführungsbeispiel ist dieses Anschlußteil 23 ein Winkelstecker mit stufenlos veränderbarer Winkellage bezüglich des Verschraubungsgehäuses 1. Der von der Spannmutter 22 umfaßte Teil dieses Winkelsteckers enthält in einem Kontaktträger Kontaktbuchsen 24, welche auf die Kontaktstifte 16 aufgesteckt werden können.

Das Herstellen der elektromechanischen Verbindung zwischen dem Winkelstecker und der Verschraubung erfolgt zweckmäßigerweise, ehe die Überwurfmutter 18 festgezogen wird, damit der Kontaktträger 15 noch zusammen mit dem zylindrischen Körper 14 und dem Meßzellengehäuse 5 relativ zum Sensorgehäuse 4 verdreht werden kann. Die Spannmutter 22 kann, da sie relativ zum Winkelstecker verdrehbar ist, auf das Gewinde der Hülse 21 aufgeschraubt werden, ohne dabei den Winkelstecker drehen zu müssen.

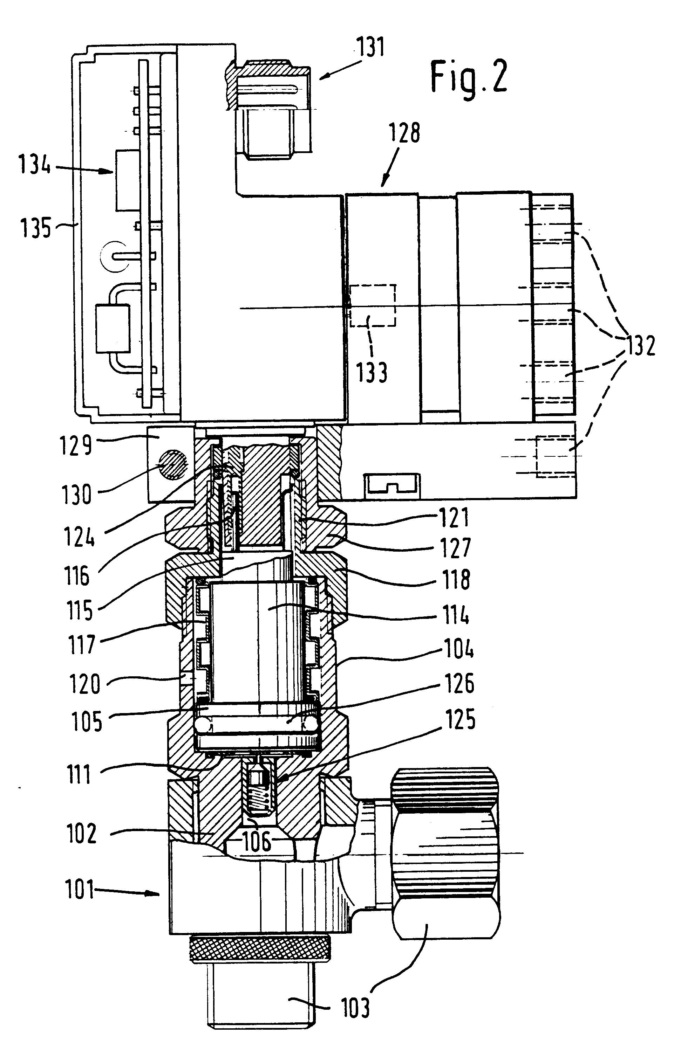

Bei der in Fig. 2 dargestellten Schwenkverschraubung besteht das Verschraubungsgehäuse 101 aus zwei Teilen. Der eine Teil bildet in an sich bekannter Weise einen als Durchsteckschraube ausgebildeten Grundkörper, an dessen einem Ende der eine der beiden Leitungsanschlüsse 103 vorgesehen ist und auf dem drehbar ein den anderen Teil bildendes Schwenkstück angeordnet ist, dessen Leitungsanschluß 103 im rechten Winkel zu demjenigen des Grundkörpers liegt. Der die beiden Leitungsanschlüsse 103 verbindende Durchlaß 102 besteht daher aus zwei rechtwinklig zueinander verlaufenden Abschnitten.

Der dem Leitungsanschluß 103 abgekehrte Endabschnitt des Grundkörpers des Verschraubungsgehäuses 101 ist als Kartusche ausgebildet, die als Sensorgehäuse 104 dient, das im wesentlichen wie das Sensorgehäuse 4 des ersten Ausführungsbeispiels ausgebildet ist. Entsprechend sind auch der vom Durchlaß 102 zum Innenraum des Sensorgehäuses 104 führende Meßkanal 106 und das in ihm angeordnete Absperrventil 125 ausgebildet, weshalb insoweit auf die Ausführungen zum ersten Ausführungsbeispiel verwiesen wird.

Das Sensorgehäuse 104, das den Deckel der Schwenkverschraubung bildet, enthält eine sich in einem Meßzellengehäuse 105 befindende Druckmeßzelle und einen sich gleichachsig an diese anschließenden zylindrischen Körper 114, welcher die zu der Meßzelle gehörige Elektronik enthält. An diesen zylindrischen Körper 114 schließt sich an der der Druckmeßzelle abgekehrten Stirnseite ein Kontaktträger 115 an, welcher Kontaktstifte 116 in zur Längsachse paralleler Anordnung trägt. Eine aus Kunststoff bestehende, dünne Kartuschenhülse vereinigt das Meßzellengehäuse 105, den zylindrischen Körper 114 und den Kontaktträger 115 zu einer einfach zu handhabenden Baueinheit. Eine solche Baueinheit ist auch für das Ausführungsbeispiel gemäß Fig. 1 vorteilhaft.

Den zylindrischen Körper 114 umgibt eine Wellrohrfeder 117, die sich unter Zwischenlage je einer Ringdichtung einerseits am Meßzellengehäuse 105 und andererseits an einer Überwurfmutter 118 abstützt, welche auf den freien Endabschnitt des Sensorgehäuses 104 aufgeschraubt wird. Die Wellrohrfeder 117 ist so dimensioniert, daß das Meßzellengehäuse 105 eine an seiner dem Absperrventil zugekehrten Stirnfläche als Meßzellenvorlage anliegende Platte 111 in Anlage am Boden des Sensorgehäuses 104 hält, solange der Druck im Durchlaß 102 die obere Druckgrenze der Druckmeßzelle nicht überschreitet. Die Platte 111 liegt, wie Fig. 2 zeigt, innerhalb einer Ringdichtung, welche zwischen dem Meßzellengehäuse 105 und dem Boden des Sensorgehäuses 104 solange wirksam ist, als das Meßzellengehäuse 105 nicht abgehoben worden ist. Im abgehobenen Zustand wird wie bei dem ersten Ausführungsbeispiel das Absperrventil 125 freigegeben, so daß dieses den Meßkanal 106 verschließen kann. Die Druckmeßzelle wird also auch hier vor einem unzulässig hohen Druck geschützt, und sofern der O-Ring 126 des Meßzellengehäuses 105 weggelassen wird, kann zur Druckentlastung die Hydraulikflüssigkeit durch die Entlastungsbohrung 120 hindurch abgeführt werden.

Mit der Überwurfmutter 118 ist wie bei dem ersten Ausführungsbeispiel einstückig eine Hülse 121 ausgebildet, welche den Kontaktträger 115 und die Kontaktstifte 116 aufnimmt und vor mechanischer Beanspruchung schützt. Die Hülse 121 hat wie die Hülse 21 ein Außengewinde, könnte aber auch als glatter Klemmstutzen ausgebildet sein.

Im Ausführungsbeispiel ist auf die Hülle 121 eine als Adapter dienende Spannmutter 127 mit Klemmstutzen aufgeschraubt, um mit der Verschraubung eine als Ganzes mit 128 bezeichnete Baugruppe verbinden zu können, welche für die Verbindung mit einem Klemmstück 129 und mit einer Klemmschraube 130 versehen ist. Bei hergestellter Verbindung ist, wie Fig. 2 zeigt, das Klemmstück 129 auf dem Klemmstutzen der Spannmutter 127 festgeklemmt und die Spannmutter 127 ist vollständig auf das Gewinde der Hülse 121 aufgeschraubt. Dabei sind die Kontaktbuchsen 124 der Baugruppe 128 auf die Kontaktstifte 116 aufgesteckt. Da der Kontaktträger 115, der zylindrische Körper 114 und das Meßzellengehäuse 105 zumindest solange relativ zum Sensorgehäuse 104 drehbar sind, als die Überwurfmutter 118 noch nicht vollständig festgezogen ist, kann die Baugruppe 128 in jede beliebige Winkellage bezüglich des Sensorgehäuses 104 eingestellt werden.

Die nicht dargestellten elektrischen Leitungen, an welche die Kontaktbuchsen 124 angeschlossen sind, sind andererseits mit den Kontakten eines Steckanschlusses 131 der Baugruppe 128 verbunden, über den alle Anschlüsse für die Signale und die Energieversorgung hergestellt werden.

Die Baugruppe 128 enthält ein elektromagnetisch betätigbares Pneumatikventil und weist deshalb mehrere Anschlüsse 132 auf, über die eine Verbindung zum Kompressor, zwei Verbrauchern und zu einem Entlüftungskanal hergestellt werden. Ferner enthält im Ausführungsbeispiel die Baugruppe 128 einen Drucksensor 133 für den Druck im pneumatischen System, da die Baugruppe 128 einen elektro -pneumatischen Stellungsregler bildet, mit dem zum Beispiel der Stellantrieb eines Hydraulik-Ventils in Abhängigkeit vom Druck des Hydraulikmittels angesteuert werden kann. Die Elektronik 134 der Baugruppe 128 ist im Ausführungsbeispiel seitlich an das das Ventil enthaltende Gehäuse angefügt und von einem Deckel 135 abgedeckt.

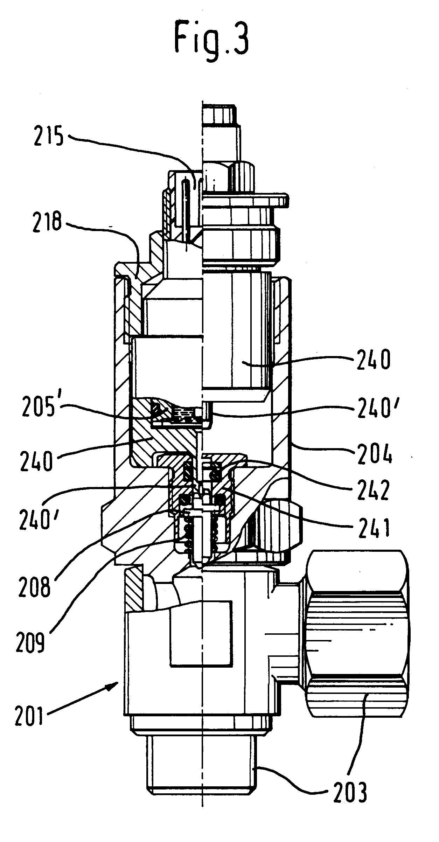

Auch bei dem Ausführungsbeispiel gemäß Fig. 3 handelt es sich um eine Schwenkverschraubung mit einem Sensor zur Kontrolle, Anzeige oder Messung des Druckes, unter dem ein sich im Inneren der Schwenkverschraubung befindendes Fluid steht.

Das Verschraubungsgehäuse 201 besteht wie das Verschraubungsgehäuse 101 des zweiten Ausführungsbeispieles aus zwei Teilen, die beide mit einem Leitungsanschluß 203 versehen sind, wobei der eine Teil den anderen durchdringt und in diesem drehbar gelagert ist. An den erstgenannten Teil schließt sich, ebenfalls wie bei dem Ausführungsbeispiel gemäß Fig. 2, gleichachsig und einstückig eine Kartusche 204 an. Der sich an das Verschraubungsgehäuse 201 anschließende Endabschnitt der Kartusche 204, der außen mit einem Sechskant versehen ist, weist eine gestufte zentrale Durchgangsbohrung auf, die einerseits in den Durchlaß des Verschraubungsgehäuses 201 und andererseits in den der Aufnahme des Sensors dienenden, hohlzylindrischen Abschnitt der Kartusche 204 mündet. Von diesem Abschnitt her ist in die Durchgangsbohrung ein Ventilgehäuse 241 eingeschraubt, das mit einer zentralen Durchgangsbohrung versehen ist, die etwa von der halben Länge bis zu dem gegen den Durchlaß des Verschraubungsgehäuses 201 weisenden Ende hin einen vergrößerten Durchmesser hat. An der am Übergang vom kleineren zum größeren Durchmesser dieser zentralen Bohrung gebildeten Schulter liegt ein 0-Ring als Ventilsitz für einen Ventilkörper 208 an, der von einem gleichachsig zur zentralen Bohrung angeordneten Stift getragen wird. Auf der dem O-Ring abgekehrten Seite liegt am Ventilkörper eine den Stift umgebende, vorgespannte Schraubenfeder 209 an, welche den Ventilkörper 209 in die in Fig. 3 rechts dargestellte Stellung zu drücken sucht, in welcher er dicht am O-Ring anliegt und damit die Durchgangsbohrung gegen den hohlzylindrischen Abschnitt der Kartusche 204 hin fluiddicht verschließt.

Die Druckmeßzelle 205' und die ihr zugeordnete, nicht dargestellte Elektronik sind in einer als Meßzellengehäuse dienenden Patrone 240 angeordnet. In dem die Druckmeßzelle 205' enthaltenden, hohlzylindrischen Abschnitt hat die Patrone 240 einen Außendurchmesser, der nur geringfügig kleiner ist als der Innendurchmesser des hohlzylindrischen, an dem vom Verschraubungsgehäuse wegweisenden Ende offenen Abschnitts der Kartusche 204. Die Patrone 240, die von diesem offenen Ende her in die Kartusche 204 eingesetzt wird, liegt deshalb mit nur geringem Spiel in der Kartusche 204. An diesen Abschnitt der Patrone 240 schließt sich auf der Seite des offenen Endes der Kartusche 204 ein im Durchmesser kleinerer Abschnitt an, an den sich ein dritter, im Durchmesser noch weiter reduzierter Abschnitt anschließt, der als Träger für den Kontaktkörper 215 dient. Ein Überwurfmutter 218, welche den mittleren Abschnitt der Patrone 240 und einen Teil des den Kontaktkörper 215 tragenden Endabschnittes aufnimmt, liegt an der Schulter der Patrone 240 an, welche am Übergang vom mittleren Abschnitt zu dem die Meßzelle 205' enthaltenden Abschnitt gebildet ist. Dadurch kann die Überwurfmutter 218, die in ein Innengewinde der Kartusche 204 einschraubbar ist, die Patrone 240 gegen die Schulter drücken, welche am Übergang von dem die Patrone 240 enthaltenden Abschnitt zu dem das Absperrventil enthaltenden Abschnitt der Kartusche 204 vorhanden ist..

An die gegen das Absperrventil weisende Stirnfläche der Patrone 240 ist zentral ein Hohlzapfen 240' angeformt, dessen zentrale Durchgangsbohrung in den die Meßzelle 205 aufnehmenden Innenraum der Patrone 240 mündet. Der Außendurchmesser und die Länge des Hohlzapfens 240' sind so gewählt, daß der Hohlzapfen in die zentrale Bohrung des Ventilgehäuses 241 einführbar ist und den den Ventilkörper 208 tragenden Stift aus der in Fig. 3 rechts dargestellten Position in die in Fig. 3 links dargestellte Position entgegen der Kraft der Feder 209 zu verschieben vermag. In dieser letztgenannten Position ist das Absperrventil geöffnet. Das Fluid kann dann durch das Absperrventil und die zentrale Bohrung des Zapfens 240' hindurch zu der Membrane der Meßzelle 205' gelangen.

Wie Fig. 3 zeigt, ist in eine Ringnut desjenigen Abschnittes der Durchgangsbohrung des Ventilgehäuses 241, der den kleineren Bohrungsdurchmesser hat, ein O-Ring 242 eingelegt. Beim Einführen des Hohlzapfen 240' in die zentrale Bohrung des Ventilgehäuses 241 während des Einbringens der Patrone 240 in die Kartusche 204 wird deshalb zunächst der Spalt zwischen der Innenwandung der zentralen Bohrung des Ventilgehäuses 241 und der Außenmantelfläche des Hohlzapfens 240' dicht verschlossen, ehe das Absperrventil geöffnet wird. Ebenso wird beim Herausnehmen der Patrone 240 aus der Kartusche 204 zunächst das Absperrventil geschlossen, ehe die Dichtung zwischen dem Hohlzapfen 240' und dem Ventilgehäuse 241 unterbrochen wird. Dadurch wird automatisch ein Austritt von Fluid vermieden.

Auf den Kontaktkörper 215 kann ein üblicher Kabelstecker aufgesteckt werden. Selbstverständlich wäre es aber auch möglich, statt des Kontaktkörpers ein Kabel vorzusehen. Da die Patrone 240 in jeder beliebigen Winkelstellung in der Kartusche 204 angeordnet sein kann, kann der Abgang eines auf den Kontaktkörper 215 aufgesetzten Winkelsteckers frei gewählt werden. Weiterhin ist es möglich, wie bei den Ausführungsbeispielen gemäß Fig. 1 und 2 die Patrone 240 federnd an der Überwurfmutter 218 abzustützen, um durch die Verschiebbarkeit der Patrone 240 entgegen der Kraft dieser Feder einen Überlastungsschutz vorsehen zu können.

**Patentansprüche**

1.  Sensoreinrichtung für flüssige und gasförmige Medien mit
    a) einem eine Meßzelle (205') enthaltenden Meßzellengehäuse (5; 105; 240),
    b) einem dieses an einen einen Meßstellenanschluß aufweisenden Körper (1; 101; 201) adaptierenden Verbindungsteil (4; 104; 204), zwischen dem und dem Meßzellengehäuse (5; 105; 240) eine mechanische lösbare Verbindung vorgesehen ist, und
    c) einer die Meßzelle (205') mit der Meßstelle verbindenden Fluid-Verbindungsleitung (6; 106), die ein Absperrventil (7 bis 10; 125; 208, 209, 241) mit einem mechanisch gesteuerten, in der Schließrichtung federbelasteten Schließkörper (8; 208) aufweist,
dadurch gekennzeichnet, daß
    d) das Verbindungsteil (4; 104; 204) Bestandteil des Körpers (1; 101; 201) ist und eine Kartusche bildet zur Aufnahme des Meßzellengehäuses (5; 105; 240),
    e) das Meßzellengehäuse (5; 105; 240) in die Kartusche eingesetzt und in dieser in axialer Richtung mittels eines von der Kartusche abnehmbaren Verschlußkörpers (18; 118; 218) positioniert ist, und
    f) das Absperrventil (7 bis 10; 125; 208, 209, 241) nur geöffnet ist, wenn das Meßzellengehäuse (5; 105; 240) in der Kartusche durch den Verschlußkörper (18; 118; 218) positioniert ist.

2.  Sensoreinrichtung nach Anspruch 1, dadurch gekennzeichnet, daß das Verbindungsteil (4; 104; 204) als Teil eines Verschraubungsgehäuses (1; 101; 201) für Rohre und/oder Schläuche ausgebildet ist.

3.  Sensoreinrichtung nach einem der Ansprüche 1 oder 2, dadurch gekennzeichnet, daß das Meßzellengehäuse (240) als eine Patrone ausgebildet ist, welche eine der Meßzelle (205') zugeordnete Elektronik enthält.

4.  Sensoreinrichtung nach einem der Ansprüche 1 bis 3, gekennzeichnet durch einen hohlen Stößel (240') zwischen dem Schließkörper (208) des Absperrventils und dem Meßzellengehäuse (240) sowie eine fluiddichte Ringdichtung (242) zwischen dem Stößel (240') und der Wandung der zum Schließkörper (208) führenden Fluid-Verbindungsleitung (6; 106).

5.  Sensoreinrichtung nach einem der Ansprüche 1 bis 4, dadurch gekennzeichnet, daß das Meßzellengehäuse (5; 105) der für eine Druckmessung ausgebilteten Meßzelle als ein Kolben ausgebildet ist, der entgegen der Kraft einer am Verschlußkörper (18; 118; 218) abgestützten Feder (17; 117) in dem als Zylinder ausgebildeten Verbindungsteil (4; 104) verschiebbar angeordnet ist.

**6.** Sensoreinrichtung nach Anspruch 5, gekennzeichnet durch eine in Abhängigkeit von der Stellung des Kolbens steuerbaren Druckentlastungseinrichtung(20; 102) für einen Abfluß von Druckmittel aus dem Raum zwischen dem Schließkörper (8) und der ihm zugekehrten Stirnseite des Kolbens.

**7.** Sensoreinrichtung nach Anspruch 5 oder 6, dadurch gekennzeichnet, daß das Meßzellengehäuse (5) auf der dem Druck des Fluids ausgesetzten Stirnseite einen Ventilteller (11) aufweist, dessen innerhalb seines Dichtkreises (12) liegende Fläche kleiner ist als die druckbelastete Fläche der Meßzelle.

**8.** Sensoreinrichtung nach einem der Ansprüche 5 bis 7, dadurch gekennzeichnet, daß die Fluidverbindungsleitung (6; 106) als Druckspitzen dämpfende Drosselstrecke ausgebildet ist.

**9.** Sensoreinrichtung nach einem der Ansprüche 1 bis 8, gekennzeichnet durch einen im Verbindungteil (4; 104) oder einem sich an dieses anschließenden Gehäuseteil (21; 121) relativ zu diesem längsverschiebbar und/oder drehbar angeordneten Kontaktträger (15; 115).

**10.** Sensoreinrichtung nach einem der Ansprüche 1 bis 9, gekezeichnet durch eine den freien Endabschnitt des Verbindungsteiles (4; 104) übergreifende Überwurfmutter (18; 118) als Verschlußkörper, die mit einem den Kontaktträger (115) und dessen Kontakte (116) aufnehmenden Stutzen (21; 121) versehen ist.

**11.** Sensoreinrichtung nach einem der Ansprüche 9 oder 10, dadurch gekennzeichnet, daß der Kontaktträger (15; 115) mit dem Meßzellengehäuse (5; 105) relativ zu diesem unbeweglich verbunden ist.

**12.** Sensoreinrichtung nach einem der Ansprüche 1 bis 11, dadurch gekennzeichnet, daß über eine lösbare Verbindungseinrichtung ein Ventil, insbesondere ein Stetig-Ventil, mechanisch mit dem Verbindungsteil (104) zu einer Baueinheit vereinigt ist.

**13.** Sensoreinrichtung nach Anspruch 12, dadurch gekennzeichnet, daß die Verbindungseinrichtung einen mit dem Kontaktträger (115) kuppelbaren Gegenkontaktträger aufweist.

**14.** Sensoreinrichtung nach Anspruch 13, dadurch gekennzeichnet, daß bei einer Ausbildung des Ventils als Regelventil die Baueinheit einen den Druck des Pneumatikmittels erfassenden zweiten Drucksensor (133) enthält.

**Claims**

**1.** Sensor device for fluid and gaseous media, with;

a) a measuring cell casing (5; 105; 240) containing a measuring cell (205');

b) a connection part (4; 104; 204) adapting this to a body (1; 101; 201), which body has a measuring cell casing connection, between which connection piece and the measuring cell casing (5; 105; 240) a mechanically detachable connection is provided; and

c) a fluid connecting pipe (6; 106) connecting the measuring cell (205') to the measuring point, which connecting pipe has a stop valve (7 to 10; 125; 208; 209; 241) with a mechanically controlled closing element (8; 208) spring-loaded in the direction of closure;

characterised in that;

d) the connection part (4; 104; 204) is a component of the body (1; 101; 201) and forms a cartridge case for the pick-up of the measuring cell casing (5; 105; 240);

e) the measuring cell casing (5; 105; 240) engages into the cartridge and is positioned therein in an axial direction by means of a breech body which is detachable from the cartridge (18; 118; 218); and

f) the stop valve (7 to 10; 125; 208; 209; 241) is only opened if the measuring cell casing (5; 105; 240) is positioned in the cartridge by means of the closing element (18; 118; 218).

**2.** Sensor device according to claim 1, characterised in that the connection part (4; 104; 204) is formed as a part of a casing for a screwing arrangement (1; 101; 201) for pipes and/or tubes.

**3.** Sensor device according to one of claims 1 or 2, characterised in that the measuring cell casing (240) is formed as a cartridge, which contains electronics associated with the measuring cell (205).

**4.** Sensor device according to one of claims 1 to 3, characterised by a hollow plunger between the closing element (208) of the stop valve and the measuring cell casing (240) and by a fluid-sealed ring seal (242) between the plunger (240') and the wall of the fluid connection pipe (6; 106) leading to the closing element (208).

5. Sensor device according to one of claims 1 to 4, characterised in that the measuring cell casing (5; 105) is, in the case of a measuring cell which is formed for measuring pressure, formed as a cam which is arranged in a displaceable manner against the force of a spring (17; 117) supported on the closing element (18; 118; 24), in the connection part (4; 104) which is formed as a cylinder.

6. Sensor device according to claim 5, characterised by a pressure-releasing device (20; 102), which may be controlled by the position of the cam, for a draining of fluid medium from the area between the closing element (8) and the front face of the cam which faces it.

7. Sensor device 5 or 6, characterised in that the measuring cell casing (5) has, on the front face thereof which is exposed to the pressure of the fluid, a valve plate (11), the surface within the sealing ring (12) of which is smaller than the surface of the measuring cell which is subjected to pressure.

8. Sensor device according to one of claims 5 to 7, characterised in that the fluid connection pipe (6; 106) is formed as a throttle area to dampen pressure peaks.

9. Sensor device according to one of claims 1 to 8, characterised by a contact carrier (15; 115) disposed in the connection part (4; 104) or a casing part (21; 121) connected therewith and longitudinally displaceable and/or rotatable in relation thereto.

10. Sensor device according to one of claims 1 to 4, characterised by a captive nut (18; 118), engaging over the free end of the connection part (4; 104) as the closing element, which nut is provided with a support (21; 121) supporting the contact carrier (115) and the contacts (116) thereof.

11. Sensor device according to one of claims 9 or 10, characterised in that the contact carrier (15; 115) is connected to the measuring cell casing (5; 105) such that it is immovable in relation thereto.

12. Sensor device according to one of claims 1 to 11, characterised in that a valve, in particular a fixed valve, is unified as one component with the connection part (104).

13. Sensor device according to claim 12, characterised in that the connection device has a counter contact carrier which can be coupled to the contact carrier (115).

14. Sensor device according to claim 13, characterised in that, in the case of the valve being formed as a controlling valve, the component incorporates a second pressure sensor (133) which detects the pressure of the pneumatic medium.

**Revendications**

1. Dispositif détecteur pour fluides liquides et gazeux, comprenant
   a) un boîtier (5 ; 105 ; 240) logeant une cellule de mesure (205'),
   b) une partie de raccordement (4 ; 104 ; 204) qui raccorde ce boîtier à un corps (1 ; 101 ; 201) présentant un branchement à un point de mesure et entre laquelle et le boîtier (5 ; 105 ; 240) de la cellule de mesure est prévue une liaison mécanique amovible et
   c) un conduit de raccordement de fluide (6 ; 106) reliant la cellule de mesure (205') au lieu de mesure et comprenant une soupape d'arrêt (7 à 10 ; 125 ; 208, 209, 241) comportant un corps obturateur (8 ; 208) commandé mécaniquement et soumis à la force d'un ressort orientée dans le sens de la fermeture,
   caractérisé en ce que
   d) la partie de raccordement (4 ; 104 ; 204) fait partie du corps (1 ; 101 ; 201) et forme une cage de logement du boîtier (5; 105 ; 240) de la cellule de mesure,
   e) le boîtier (5 ; 105 ; 240) de la cellule de mesure est installé dans la cage et positionné dans cette dernière en direction axiale au moyen d'un corps d'obturation (18 ; 118 ; 218) pouvant être démonté de la cage et
   f) la soupape d'arrêt (7 à 10 ; 125 ; 208, 209, 241) n'est ouverte que lorsque le boîtier (5 ; 105 ; 240) de la cellule de mesure est positionné dans la cage par le corps d'obturation (18 ; 118 ; 218).

**2.** Dispositif détecteur selon la revendication 1, caractérisé en ce que la partie de raccordement (4 ; 104 ; 204) est conformée en partie d'une enveloppe (1; 101; 201) de raccord vissé pour tubes et/ou flexibles.

**3.** Dispositif détecteur selon l'une des revendications 1 ou 2, caractérisé en ce que le boîtier (240) de la cellule de mesure est conformé en cartouche qui loge une électronique associée à la cellule de mesure (205').

**4.** Dispositif détecteur selon l'une des revendications 1 à 3, caractérisé par un poussoir creux (240') entre le corps obturateur (208) de la soupape d'arrêt et le boîtier (240) de la cellule de mesure ainsi que par un joint annulaire (242) d'étanchéité aux fluides disposé entre le poussoir (240') et la paroi du conduit de raccordement de fluide (6 ; 106) menant au corps obturateur (208).

**5.** Dispositif détecteur selon l'une des revendications 1 à 4, caractérisé en ce que le boîtier (5 ; 105) de la cellule de mesure conçue pour une mesure de pression est conformé en piston qui est disposé mobile en translation, dans la partie de raccordement (4 ; 104) conformée en cylindre, contre la force d'un ressort (17 ; 117) qui prend appui contre le corps d'obturation (18 ; 118 ; 218).

**6.** Dispositif détecteur selon la revendication 5, caractérisé par un dispositif de décompression (20 ; 102) commandé en fonction de la position du piston et destiné à une évacuation de fluide sous pression de l'espace compris entre le corps obturateur (8) et le côté extrême du piston qui est tourné vers ce dernier.

**7.** Dispositif détecteur selon la revendication 5 ou 6, caractérisé en ce que le boîtier (5) de la cellule de mesure comporte sur le côté extrême exposé à la pression du fluide une tête de soupape (11) dont la surface située à l'intérieur d'un cercle d'étanchéité (12) est plus petite que la surface de la cellule de mesure soumise à la pression.

**8.** Dispositif détecteur selon l'une des revendications 5 à 7, caractérisé en ce que le conduit de raccordement de fluide (6 ; 106) est conformé en canal d'étranglement qui amortit les excursions de pression.

**9.** Dispositif détecteur selon l'une des revendications 1 à 8, caractérisé par un porte-contacts (15 ; 115) disposé dans la partie de raccordement (4 ; 104) ou dans une partie d'enveloppe (21 ; 121) prolongeant cette dernière et par rapport à laquelle il est mobile en translation et/ou rotatif.

**10.** Dispositif détecteur selon l'une des revendications 1 à 4, caractérisé par un écrou à chapeau (18 ; 118) qui chapeaute l'extrémité libre. de la partie de raccordement (4 ; 104) et forme un corps d'obturation comportant une douille (21 ; 121) logeant le porte-contacts (115) et ses contacts (116).

**11.** Dispositif détecteur selon l'une des revendications 9 ou 10, caractérisé en ce que le porte-contacts (15 ; 115) est relié au boîtier (5 ; 105) de la cellule de mesure par rapport auquel il est immobile.

**12.** Dispositif détecteur selon l'une des revendications 1 à 11, caractérisé en ce qu'une soupape, en particulier une soupape à réglage progressif, est réunie mécaniquement en un module avec la partie de raccordement (104) au moyen d'un dispositif démontable de liaison.

**13.** Dispositif détecteur selon la revendication 12, caractérisé en ce que le dispositif de liaison comprend un porte-contacts complémentaire pouvant être enfiché avec le porte-contacts (115).

**14.** Dispositif détecteur selon la revendication 13, caractérisé en ce que, lorsque la soupape est conformée en soupape de réglage, le module comprend un second détecteur de pression (133) qui détecte la pression du fluide pneumatique.

23

22

24

Fig.1

15

21

17

16

20

18

19

14

13

5

12

11

4

7

9

10

8

3

2   6   1

3

Fig.2

# Fig.3

215

218

240

205'

240'

240

204

242

240'

241

208

209

201

203